Europäisches Patentamt

European Patent Office

Office européen des brevets

(11) Publication number: **0 091 889**
**B1**

## (12) EUROPEAN PATENT SPECIFICATION

(45) Date of publication of patent specification: **01.04.87**

(21) Application number: **83850071.8**

(22) Date of filing: **18.03.83**

(51) Int. Cl.⁴: **B 60 R 9/04**

(54) **A luggage carrier for vehicles.**

(30) Priority: **14.04.82 SE 8202336**

(43) Date of publication of application:
**19.10.83 Bulletin 83/42**

(45) Publication of the grant of the patent:
**01.04.87 Bulletin 87/14**

(84) Designated Contracting States:
**AT BE CH DE FR GB IT LI NL**

(56) References cited:
**DE-A-2 921 703**
**DE-B-2 426 419**

(73) Proprietor: **Industri AB Thule**
**Box 69**
**S-330 33 Hillerstorp (SE)**

(72) Inventor: **Thulin, Willis**
**Vallgatan 18**
**S-330 33 Hillerstorp (SE)**

(74) Representative: **Linde, Leif**
**Vernamo Patentbyrä AB P.O. Box 1**
**S-270 11 Abbekas (SE)**

Courier Press, Leamington Spa, England.

## Description

The present invention relates to a luggage carrier for vehicles, comprising a support rod and support legs connected with the ends of the support rod and having fastening devices for fastening the luggage carrier to a vehicle, preferably the rain gutters of the vehicle roof.

Luggage carriers of this kind are to an increasing extent used for supporting and holding roof racks, ski-carriers, carriers for surf-boards and so on at the vehicle roofs. Such luggage carriers are a simple and advantageous means for allowing the transportation of bulky objects by means of passenger cars.

It is previously known to provide the luggage carriers of the type described above with lockable protective devices which are movable between a closed and an open position. In their closed position the protective devices prevent unauthorized operation of the fastening devices and thereby prevent an unauthorized removal of the luggage carrier from a vehicle to which the luggage carrier is fastened, and/or prevent unauthorized removal of articles supported by the luggage carrier. Previously known protective devices of this kind are either completely removable from the rest of the luggage carrier or pivotably connected therewith. It represents a drawback to construct the protective devices so that they are completely removable from the luggage carrier with regard to the fact that it is thereby, of course, possible that the protective devices disappear or are lost. On the other hand the pivotable connection of the protective devices with the luggage carrier provide a restriction of the possibilities of releasing the luggage carrier from the vehicle in an easy way and/or releasing objects supported by the luggage carrier. For example it is desirable that objects which are supported by the luggage carrier and which are in turn used for holding for example skis and surf-boards shall be releasable from and connectable with the luggage carrier by being displaced in the longitudinal direction of the support rod of the luggage carrier. However, this can be difficult to provide in the case that the protective devices are pivotably connected with the luggage carrier.

Known luggage carriers with lockable protective devices are described in DE—A—2426419 and DE—A—2921703.

The object of the invention is to provide a luggage carrier for vehicles, in which the above drawback is obviated and the protective devices are connected with the rest of the luggage carrier in such a way that it is possible to move the protective devices completely away from a position, in which they obstruct the releasing of the luggage carrier from a vehicle, to which the luggage carrier is fastened, and/or releasing objects supported by the luggage carrier, without making it necessary to release the protective devices from the luggage carrier.

In order to comply with this object the luggage carrier according to the invention is characterized in that the protective means is connected with the rest of the luggage carrier by means of link devices pivotably connected with the protective means as well as with the support legs.

Because of the fact that the protective devices are connected with the rest of the luggage carrier by means of link devices the protective devices can take positions at a distance from the rest of the luggage carrier without being released therefrom so that they do not obstruct said releasing of the luggage carrier and the objects supported thereby in any respect.

In a preferred embodiment of the invention the protective devices and portions of the luggage carrier separate therefrom comprise complementary parts of devices for releasable, pivotable connection of portions of the protective devices positioned at a distance from the link devices, the pivot axes of the connection devices and the pivot axes of the link devices, the pivot axes of the connection devices and the pivot axes of the link devices being so positioned in relation to each other, that said pivot axes pass the position, in which the axes are positioned in alignment with each other when the protective devices are pivoted from an open to a closed position. This provides that the link devices retain the protective devices in a closed position without the assistance of separate locking devices because of the fact that the protective devices pass a dead center position in passing from the closed to the open position.

Thereby, the link devices and/or the connections thereof with the protective devices and/or the rest of the luggage carrier are resilient, whereby it is preferred that the link devices comprise resilient link arms.

The invention is described in the following with reference to the accompanying drawings.

Fig. 1 is a perspective view of an end portion of an embodiment of a luggage carrier according to the invention.

Fig. 2 is a side view of the end portion of Fig. 1 of a luggage carrier according to the invention.

Fig. 3 is a side view showing the end portion of the luggage carrier of Fig. 2 with a protective device in an open position.

Fig. 4 is a side view of an end portion of the luggage carrier according to the invention supporting a ski-carrier.

Fig. 5 is a side view of the luggage carrier according to Figs. 2 and 3 having a support leg pivoted to an inoperative position.

Fig. 6 shows a detail of the luggage carrier of Figs. 1-5.

A luggage carrier according to the invention comprises a support rod and two support legs connected with the ends of the support rod. The support legs are adapted to be connected with the rain gutters of the roof of the vehicle, so that the support rod extends transversely of the roof of the vehicle. Usually a vehicle is provided with two luggage carriers which are mounted at a distance from each other in the longitudinal direction of the vehicle. Thereby, the luggage carrier can be used for supporting a roof rack, ski-carriers, carriers for surf-boards, carriers for bicycles and so on. In the figures of the drawings there is shown only one end portion of an embodiment of a luggage carrier according to the invention, but it is realized that a complete luggage carrier comprises a support rod having a length corresponding to the width of a vehicle, each support rod comprising two support legs of the kind shown in the figures.

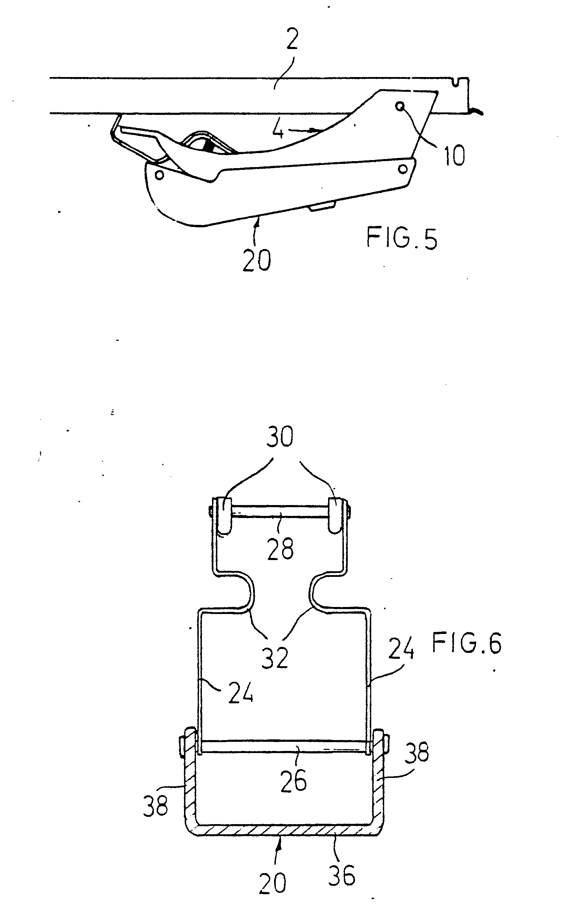

The embodiment of a luggage carrier according to the invention shown in the drawings comprises a support rod 2 having a C-shaped, upwardly open cross-section. To the end of the support rod 2 there is connected a support leg 4 having a substantially U-shaped cross-section including side walls 6 and an end wall 8. Each side wall 6 of the support leg 4 is connected with the support rod 2 by means of pivot pins 10 which make it possible to pivot the support leg 4 against the support rod 2 to the space saving position shown in Fig. 5. At its lower end the support leg 4 has a fastening device consisting of a hook 12 and a clamping bolt 14 having a knob 16. The support leg 4 has an end portion 18 which is adapted to engage a rain gutter at the side of a roof of a vehicle, while the hook 12 is adapted to engage with the lower side of the rain gutter in order to secure the support leg thereto. By means of the knob 16 it is possible to rotate the clamping bolt 14 for fastening the support leg 4 to the rain gutter.

A protective cover 20 is pivotably connected with the support leg 4 by means of a link device 22. The link device 22 consists of two link arms 24 (most clearly shown in Fig. 6) which are pivotably connected with the protective cover 20 by means of a pivot pin 26 and are pivotably connected with the support leg 4 by means of a pivot pin 28 which is supported by lugs 30 at the outer side of the support leg 4. The link arms 24 are provided with cranks 32 making the link arms and thereby the link device 22 resilient. By this resiliency it is possible to change the distance between the pivot pins 26 and 28 by exerting to the protective cover 20 a force which is parallel with the link arms 24.

Like the support leg 4 also the cross-section of the protective cover 20 is substantially U-shaped comprising two side walls 34 and an end wall 36. A pin 38 extends between the side walls 34 at the upper end of the protective cover 20. The pin 38 is adapted to engage in recesses 40 formed at the upper edge portions of the side walls 6 of the support leg 4.

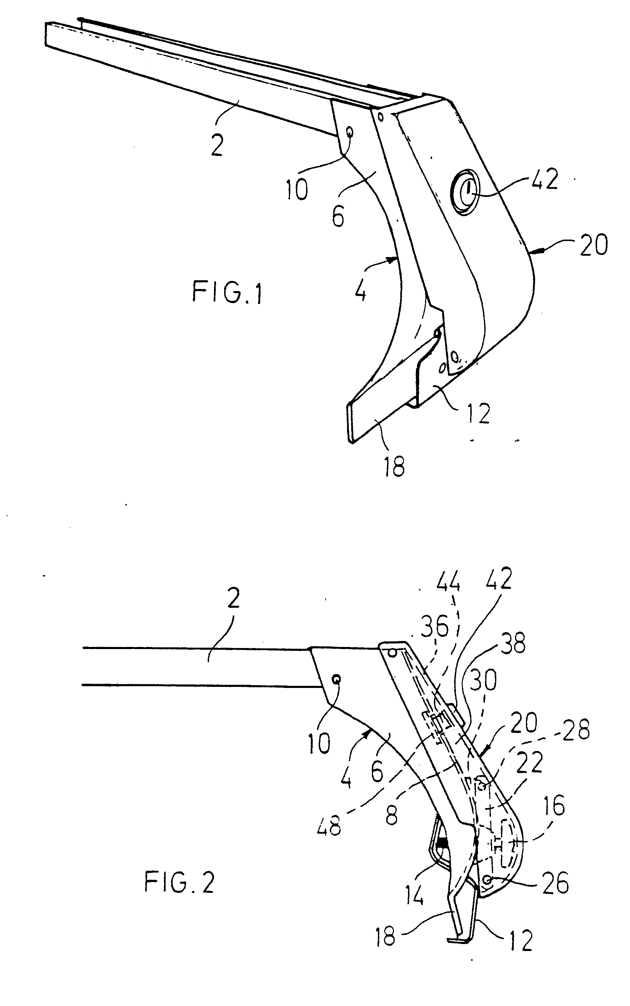

The end wall 36 of the protective cover 20 supports a lock 42 having a cylindrical portion 44 which extends through an opening 46 formed in the end wall 8 of the support leg 4 in the closed position of the protective cover shown in Figs. 1 and 2. At its inner end the cylindrical portion 44 is provided with a locking pin 48 which in a conventional manner is rotatable by means of a key between a position in which it is movable through the opening 46 and another position in which it maintains the protective cover 20 in the closed position thereof by engaging the inner side of the end wall 8.

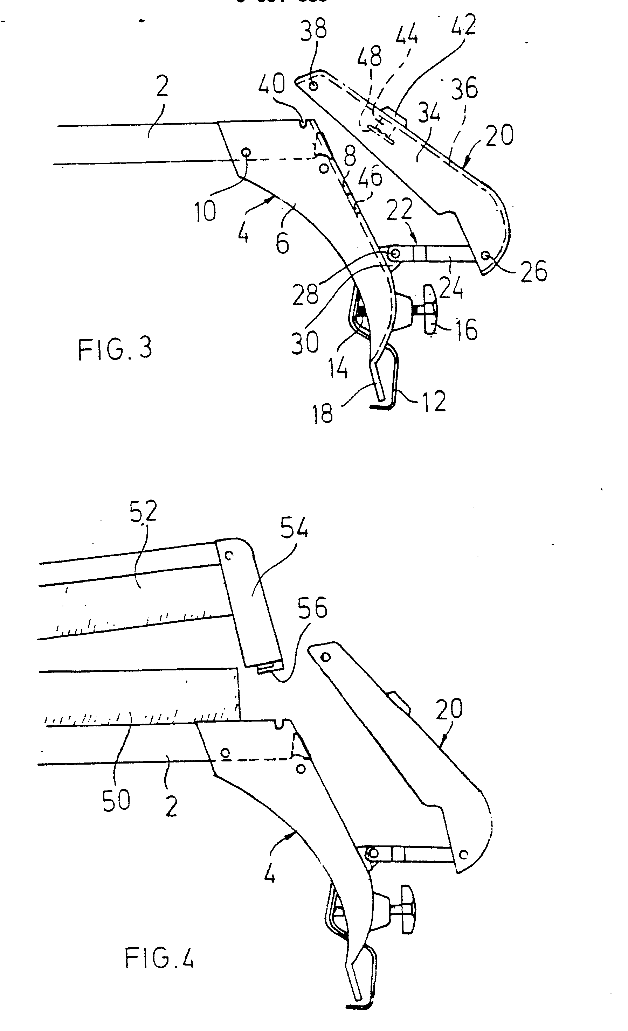

In the position of the protective cover 20 shown in Figs. 1 and 2 it is not possible to operate the knob 16 for rotating the clamping bolt 14 and release the luggage carrier from a vehicle to which the luggage carrier is fastened. It is not either possible to remove or release from the support rod 2 of the luggage carrier an object supported by the luggage carrier. Such an object can for example be constituted by a ski-carrier of the type shown in Fig. 4. The ski-carrier consists of two portions, a lower portion 50 and an upper portion 52. The lower portion 50 is fixed to the luggage carrier by the fact that a portion thereof has been slided into the hollow space of the support rod 2 from the end thereof. In the position of the protective cover 20 shown in Figs. 1 and 2 the end of support rod 2 is closed making it impossible to withdraw the portion 50 of the ski-carrier from the support rod 2. The portion 52 of the ski-carrier is pivotally connected with the portion 50 of the ski-carrier at the end of the ski-carrier opposite to the support leg 4 and comprises an end portion 54 pivotably connected with the portion 52. At its lower end the end postion 54 has a connection element 56 which is engageable with the support rod 2 from the end thereof for being retained in a position in which the portions 50 and 52 are substantially parallel with each other. It is recognized that in the position wherein the connection element 56 is connected with the end portion of the support rod 2 and the protective cover 20 is in its closed position shown in Figs. 1 and 2, the end portion 54 is retained by the protective cover in said position in which skis positioned between the portions 50 and 52 are in a thief-proof way supported by the ski-carrier. Not until the protective cover is moved from its closed position is it possible to release the connection element 56 and thereby the end portion 54 so that the portion 52 of the ski-carrier can be pivoted upwards and the skis can be removed from the ski-carrier.

Fig. 3 shows the open position of the protective cover 20. This position is reached by unlocking the lock 42 by rotating the locking pin by means of a key to a position in which the locking pin can be passed out through the opening 46, whereupon the protective cover 20 is pivoted in a counterclockwise direction according to Fig. 2 around the axis of the pin 38. Thereby, the link device 22 is pivoted in a counter-clockwise direction, the link arms 24 being thereby resiliently elongated until the dead center has been passed, that is the point in which the pivot pins 26, 28 and 38 are in alignment with each other. When the protective cover 20 and the link device 22 have passed the dead center the firm engagement of the pin 38 in the recesses 40 is ceased so that the pin 38 can be lifted out from the recesses to the open position of the protective cover 20 shown in Fig. 3.

It is recognized that in the position shown in Fig. 3 the protective cover 20 does not obstruct the operation of the knob 16 in order to loosen the clamping bolt 14 and allow the luggage carrier to be removed from a vehicle to which the luggage carrier is fastened. By pivoting the protective cover 20 and the link device 22 somewhat clockwise from the position shown in Fig. 3 it is possible to position the protective cover 20 so that it does not obstruct the removal of an object, for example the ski-carrier shown in Fig. 4, supported by the support rod 2 from the support rod 2 by withdrawing the object from the support rod 2 at the end portion thereof.

Thus, it is recognized that it is possible to position the protective cover 20 in different positions allowing the desired operation of the luggage carrier, because of the fact that the protective cover is connected with the rest of the luggage carrier by means of a link device 22.

Because of the fact that the link device 22 is resilient there is obtained a securing of the protective cover 20 in the closed position thereof even if the lock 42 is not in its locked position. Because of the fact that the cylindrical portion 44 of the lock 42 engages the edges of the opening 46 in the closed position of the protective cover 20 the link arms 24 will not be subjected to any stresses in the closed position of the protective cover 20 in spite of the fact that the link arms are resilient.

When the protective cover 20 is being closed the pin 38 is initially positioned in the recesses 40, whereupon the protective cover 20 is pivoted in the clockwise direction to the closed position adjacent the support leg 4, the dead center being thereby passed while the link device 22 is resiliently deformed. In the closed position of the protective cover 20 the protective cover can be locked by rotating the locking pin 48 of the lock 42 to the locked position even if this is not necessary for retaining the protective cover 20 in its closed position.

In Fig. 5 there is shown that the support leg 4 and the protective cover 20 can be pivoted to a position adjacent the support rod 2 so that the luggage carrier requires a space which is as small as possible in a storage position of the carrier. The luggage carrier comprises any kind of device (not shown) for securing the support leg in the extended, operative position. Also this securing device is positioned and constructed in such a way that it is operable to make it possible to pivot the support leg only when the protective cover 20 is in its open position.

The invention can be modified within the scope of the following claims. Thus, it is possible to modify the construction and positioning of the link device in many different ways. Instead of constructing the link arms 24 so that they are resilient it is possible to provide the resiliency at the connection between the link arms and the protective cover and/or between the link arms and the support leg. It is also possible to design the link device and the connections thereof in a rigid manner and provide some kind of resilient device at the connection between the pin 38 and the recesses 40.

## Claims

1. A luggage carrier for vehicles comprising a support rod (2) and support legs (4) connected with the ends of the support rod and comprising fastening devices (14, 16) for fastening the luggage carrier to a vehicle, preferably the rain gutter of the roof of the vehicle, and further comprising protective means (20), the protective means being adapted in a closed position to obstruct operation of the fastening devices (14, 16) and thereby releasing of the luggage carrier from a vehicle to which the luggage carrier is fastened and/or releasing of objects (50, 52) supported by the luggage carrier and in an open position to allow such operation and/or releasing, characterized in that the protective means (20) is connected with the rest of the luggage carrier by means of link devices (22) pivotably connected with the protective means as well as with the support legs (4).

2. A luggage carrier as claimed in claim 1, characterized in that the protective means (22) and portions (4) of the luggage carrier separate therefrom comprise complementary portions (38, 40) of devices for releasable, pivotable connection of portions of the protective means positioned at a distance from the link devices (22) to the rest of the luggage carrier, the pivot axes (38) of the connection device and the pivot axes (26, 28) of the link devices being so positioned in relation to each other that the pivot axes pass a position in which the axes are in alignment with each other when the protective means is pivoted from an open to a closed position.

3. A luggage carrier as claimed in any of the preceding claims, characterized in that the link devices (22) and/or the connections of the link devices with the protective means (20) and/or the rest of the luggage carrier are resilient.

4. A luggage carrier as claimed in any of claims 2 and 3, characterized in that the devices (38, 40) for releasable, pivotable connection of the protective means (20) are resilient.

5. A luggage carrier as claimed in claim 3, characterized in that the link devices comprise resilient link arms (24).

6. A luggage carrier as claimed in any of the preceding claims, characterized in that the protective means (20) and the rest of the luggage carrier comprise complementary locking menas (42, 46) which are adapted to be displaced into engagement with each other when the protective means (20) is moved from an open to a closed position.

7. A luggage carrier as claimed in claim 6, characterized in that the portions of the locking means (42, 46) are adapted to relieve the link devices (22) when engaging each other.

8. A luggage carrier as claimed in any of claims 2—7, characterized in that the complementary portions (38, 40) of the devices for releasable, pivotable connection of the protective means (20) to the rest of the luggage carrier consist of recesses (40) and pins (38) introduceable into said recesses and that said portions are positioned at the upper ends of the support legs (4) and the protective means (20).

**Patentansprüche**

1. Lastenträger für Fahrzeuge mit einer Trägerstange (2) und Tragfüßen (4), die mit den Enden der Trägerstange verbunden sind, und mit Befestigungsvorrichtungen (14, 16) zur Befestigung des Lastenträgers am Fahrzeug, vorzugsweise der Regenrinne des Daches des Fahrzeuges, und mit Schutzmitteln (20), die geeignet derart ausgestaltet sind, daß' sie in einer geschlossenen Stellung die Betätigung der Befestigungsvorrichtungen (14, 16) hindern und dadurch das Lösen des Lastenträgers von einem Fahrzeug hindern, an welchem der Lastenträger befestigt ist, und/oder das Lösen von Gegenständen (50, 52) hindern, die von dem Lastenträger gehaltert sind, und um in einer offenen Stellung eine solche Betätigung und/oder ein solches Lösen von Gegenständen (50, 52) hindern, die von dem Lastenträger gehaltert sind, und um in einer offenen Stellung eine solche Betätigung und/oder ein solches Lösen erlauben, dadurch gekennzeichnet, daß das Schutzmittel (20) mit der Auflage des Lastenträgers mittels Gelenkvorrichtungen (22) verbunden ist, die schwenkbar mit dem Schutzmittel sowie den Tragfüßen (4) verbunden sind.

2. Lastenträger nach Anspruch 1, dadurch gekennzeichnet, daß das Schtzmittel (22) und Teile (4) des Lastenträgers getrennt von diesem komplementäre Teile (38, 40) von Vorrichtungen aufweisen für die lösbare, schwenkbarre Verbindung von Teilen des Schutzmittels, die in einem Abstand von den Gelenkvorrichtungen (22) angeordnet sind, an der Auflage des Lastenträgers, wobei die Schwenkachsen (38) der Verbindungsvorrichtungen und die Schwenkachsen (26, 28) der Gelenkvorrichtungen so bezüglich einander angeordnet sind, daß die Schwenkachsen durch eine Stellung hindurchgehen, in welcher die Achsen zueinander in Flucht liegen, wenn das Schutzmittel von einer offenen Stellung in eine geschlossene Stellung geschwenkt wird.

3. Lastenträger nach einem der vorhergehenden Ansprüche, dadurch gekennzeichnet, daß die Gelenkvorrichtungen (22) und/oder die Verbindungen für die Gelenkvorrichtungen mit dem Schutzmittel (20) und/oder der Auflage des Lastenträgers elastisch sind.

4. Lastenträger nach einem der Ansprüche 2 und 3, dadurch gekennzeichnet, daß die Vorrichtungen (38, 40) für das lösbare, schwenkbre Verbinden des Schutzmittels (20) elastisch sind.

5. Lastenträger nach Anspruch 3, dadurch gekennzeichnet, daß die Gelenkvorrichtungen elastische Gelenkarme (24) aufweisen.

6. Lastenträger nach einem der vorhergehenden Ansprüche, dadurch gekennzeichnet, daß das Schutzmittel (20) und die Auflage des Lastenträgers komplementäre Verriegelungsmittel (42, 46) aufweisen, die in Eingriff miteinander verschoben werden können, wenn das Schutzmittel (20) von einer offenen in eine geschlossene Stellung bewegt wird.

7. Lastenträger nach Anspruch 6, dadurch gekennzeichnet, daß die Teile des Verriegelungsmittels (42, 46) geeignet derart ausgestaltet sind, daß sie die Gelenkvorrichtungen (22) entlasten, wenn sie miteinander in Eingriff treten.

8. Lastenträger nach einem der Ansprüche 2 bis 7, dadurch gekennzeichnet, daß die komplementären Teile (38, 40) der Vorrichtungen für das lösbare, schwenkbare Verbinden des Schutzmittels (20) mit der Auflage des Lastenträgers aus Ausnehmungen (40) und Stiften (38) bestehen, welche in die Ausnehmungen einführbar sind, und daß die Teile an den oberen Enden der Tragfüße (4) und des Schutzmittels (20) angeordnet sind.

**Revendications**

1. Porte-bagages pour véhicules comprenant une tige (2) de support et des bras (4) de support reliés aus extrémités de la tige de support et comportant des dispositifs (14, 16) de fixation pour fixer le porte-bagages sur un véhicule, de préférence sur le jet d'eau du toit du véhicule, et comprenant en outre un moyen (20) de protection, ce moyen de protection étant prévu pour empêcher, lorsqu'il se trouve dans sa position fermée, le fonctionnement des dispositifs (14, 16) de fixation et, par conséquent, l'enlèvement du porte-bagages du véhicule sur lequel il est fixé et (ou) l'enlèvement d'objets (50, 52) supportés par le porte-bagages, et pour permettre, lorsqu'il se trouve dans sa position ouverte, ce fonctionnement et (ou) cet enlèvement, ce porte-bagages étant caractérisé en ce que le moyen (20) de protection est relié au reste du porte-bagages par des dispositifs (22) d'accouplement articulés sur le moyen de protection ainsi que sur les bras (4) de support.

2. Porte-bagages suivant la revendication 1, caractérisé en ce que le moyen (20) de protection et les parties (4) du porte-bagages distinctes de ce dernier comprennent des parties complémentaires (38, 40) de dispositif prévues pour articuler de manière amovible des parties du moyen de protection, placées à une certaine distance des dispositifs (22) d'accouplement, sur le reste du porte-bagages, les pivots (38) des dispositifs d'articulation et les pivots (26, 28) des dispositifs d'accouplement sont positionnés les uns par rapport aux autres de telle sorte que ces pivots dépassent une position dans laquelle ils se trouvent dans l'alignement les uns des autres lorsqu'on fait pivoter le moyen de protection de la position ouverte à la position fermée.

3. Porte-bagages suivant l'une quelconque des revendications précédentes, caractérisé en ce que les dispositifs (22) d'accouplement et (ou) leurs articulations sur le moyen (20) de protection et (ou) sur le reste du porte-bagages sont élastiques.

4. Porte-bagages suivant l'une quelconque des revendications 2 et 3, caractérisé en ce que les dispositifs (38, 40) pour l'articulation amovible du moyen (20) de protection sont élastiques.

5. Porte-bagages suivant la revendication 3, caractérisé en ce que les dispositifs (22) d'accouplement comprennent des branches élastiques (24) d'accouplement.

6. Porte-bagages suivant l'une quelconque des revendications précédentes, caractérisé en ce que le moyen (20) de protection et le reste du porte-bages comprennent des moyens complémentaires (42, 46) de verrouillage qui sont prévus pour être engagés l'un avec l'autre lorsque le moyen (20) de protection est déplacé de la position ouverte à la position fermée.

7. Porte-bagages suivant la revendication 6, caractérisé en ce que les parties des moyens (42, 46) de verrouillage sont prévues pour relâcher les dispositifs (22) d'accouplement lorsqu'elles sont engagées l'une avec l'autre.

8. Porte-bagages suivant l'une quelconque des revendications 2 à 7, caractérisé en ce que les parties complémentaires (38, 40) des dispositifs pour articuler de manière amovible le moyen (20) de protection sur le reste du porte-bagages, comprennent des encoches (40) et des pivots (38) qui peuvent être introduits dans ces encoches, et en ce que ces parties sont placées aux extrémités supérieures des bras (4) de support et du moyen (20) de protection.

0 091 889

FIG.1

FIG.2

1

FIG. 3

FIG. 4

2

FIG.5

FIG.6